# EUROPÄISCHE PATENTSCHRIFT

(11) **EP 3 909 750 B1**
(45) Veröffentlichungstag und Bekanntmachung des Hinweises auf die Patenterteilung: **08.01.2025**
(21) Anmeldenummer: 21183033.6
(22) Anmeldetag: 07.07.2017
(51) Int. Cl.: B29C 64/268, B29C 64/393, B22F 10/00, B22F 10/30, B22F 12/00, B29C 64/153, B29C 64/277, B29C 64/364, B33Y 10/00, B33Y 30/00, B33Y 50/02, B33Y 40/20, B22F 10/20, B22F 12/45, B22F 12/13, B22F 10/364, B22F 10/362, B22F 10/28

(54) **VERFAHREN ZUR ADDITIVEN HERSTELLUNG DREIDIMENSIONALER OBJEKTE**
METHOD FOR ADDITIVE PRODUCTION OF THREE-DIMENSIONAL OBJECTS
PROCÉDÉ DE FABRICATION ADDITIVE D'OBJETS TRIDIMENSIONNELS

(30) Priorität: 09.03.2017 DE 102017105056
(43) Veröffentlichungstag der Anmeldung: 17.11.2021
(62) Teilanmeldung aus: 17180166.5
(73) Patentinhaber: Concept Laser GmbH, 96215 Lichtenfels (DE)
(72) Erfinder: Pontiller-Schymura, Peter, 96215 Lichtenfels (DE); Döhler, Tim, 96215 Lichtenfels (DE); Trutschel, Felix, 96215 Lichtenfels (DE)
(74) Vertreter: Hafner & Kohl PartmbB

(56) Entgegenhaltungen:
- US-A1- 2015 064 048
- US-A1- 2016 250 717

## Beschreibung

Die Erfindung betrifft eine Vorrichtung zur additiven Herstellung dreidimensionaler Objekte durch sukzessives schichtweises selektives Bestrahlen und damit einhergehendes sukzessives schichtweises selektives Verfestigen von Baumaterialschichten aus einem vermittels eines Energiestrahls verfestigbaren Baumaterial, umfassend mehrere Bestrahlungseinrichtungen, welche jeweils zur Erzeugung wenigstens eines Energiestrahls eingerichtet sind, sowie eine Steuereinrichtung, welche zur Erzeugung von den Betrieb der Bestrahlungseinrichtungen steuernden Steuerinformationen und zur Steuerung des Betriebs der Bestrahlungseinrichtungen auf Grundlage erzeugter Steuerinformationen eingerichtet ist. Vorrichtungen zur additiven Herstellung dreidimensionaler Objekte sind dem Grunde nach bekannt. Vermittels entsprechenden Vorrichtungen werden herzustellende dreidimensionale Objekte durch sukzessives schichtweises selektives Bestrahlen und damit einhergehendes sukzessives schichtweises selektives Verfestigen von Baumaterialschichten in den dem schichtbezogenen Querschnitt des herzustellenden Objekts entsprechenden Bereichen aus einem vermittels eines Energiestrahls verfestigbaren Baumaterial additiv aufgebaut. US2015/064048A1 offenbart ein Verfahren gemäss dem Oberbegriff des Anspruchs 1.

Weiterhin ist es bekannt, dass, um möglichst optimale Eigenschaften jeweiliger additiv herzustellender Objekte zu realisieren, eine Temperierung selektiv zu verfestigender bzw. selektiv verfestigter Baumaterialschichten zweckmäßig ist. Eine entsprechende Temperierung kann z. B. bei, typischerweise vorgetrockneten, hygroskopischen Baumaterialien, d. h. z. B. Aluminium, zur Reduzierung der Gasporosität, d. h. insbesondere der Wasserstoffporosität, beitragen.

Bis dato erfolgt eine Temperierung selektiv zu verfestigender bzw. selektiv verfestigter Baumaterialschichten üblicherweise über in ein eine Baukammer definierendes Baumodul integrierte Heizelemente, d. h. z. B. Widerstandsheizelemente. Die Heizelemente können z. B. in eine die Baukammer bodenseitig begrenzende Bodenplatte des Baumoduls integriert sein. Die über die Heizelemente in die Baukammer flächig eingebrachte thermische Energie sorgt für eine gewisse Temperierung des in der Baukammer befindlichen, gegebenenfalls vorgetrockneten, Baumaterials.

Dieses Prinzip der Temperierung ist in mehrfacher Hinsicht weiterentwicklungsbedürftig; dies insbesondere deshalb, als es keine Vortrocknung des Baumaterials und keine lokale Temperierung des Baumaterials ermöglicht. Zudem ist die Temperierung des Baumaterials mit entsprechenden Heizelementen auf einen Temperaturgrenzwert beschränkt, welcher im Hinblick auf die Verarbeitung neuartiger, insbesondere hochschmelzender, Materialien, zu gering sein kann.

Der Erfindung liegt damit die Aufgabe zugrunde, eine demgegenüber verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Bestrahlen und damit einhergehendes sukzessives schichtweises selektives Verfestigen von Baumaterialschichten aus einem verfestigbaren Baumaterial in den dem schichtbezogenen Querschnitt des jeweils herzustellenden Objekts entsprechenden Baumaterialschichtbereichen eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" Daten des additiv herzustellenden Objekts beinhalten.

Die Vorrichtung kann z. B. als Vorrichtung zur Durchführung selektiver Laserschmelzverfahren (abgekürzt SLM-Verfahren), oder als Vorrichtung zur Durchführung selektiver Lasersinterverfahren (abgekürzt SLS-Verfahren), ausgebildet sein. Denkbar ist es auch, dass die Vorrichtung als Vorrichtung zur Durchführung selektiver Elektronenstrahlschmelzverfahren (abgekürzt SEBS-Verfahren), ausgebildet ist.

Die Vorrichtung umfasst die zur Durchführung additiver Bauvorgänge typischerweise erforderlichen Funktionskomponenten. Hierzu zählen insbesondere wenigstens eine Beschichtungseinrichtung und wenigstens eine Bestrahlungseinrichtung. Eine entsprechende Beschichtungseinrichtung ist zur Ausbildung selektiv zu verfestigender Baumaterialschichten in einer Bauebene der Vorrichtung, in welcher die sukzessive schichtweise selektive Bestrahlung und die damit einhergehende sukzessive schichtweise selektive Verfestigung von Baumaterialschichten erfolgt, eingerichtet und umfasst hierzu typischerweise ein relativ zu der Bauebene bewegbar gelagertes, insbesondere klingenartiges bzw. -förmiges, Beschichtungselement. Eine entsprechende Bestrahlungseinrichtung ist zur selektiven Bestrahlung selektiv zu verfestigender Baumaterialschichten in der Bauebene der Vorrichtung eingerichtet und umfasst hierzu typischerweise eine Energiestrahlerzeugungseinrichtung, welche zur Erzeugung eines Energiestrahls eingerichtet ist, und gegebenenfalls eine auch als Scannereinrichtung zu bezeichnende bzw. zu erachtende Energiestrahlablenkeinrichtung, welche zur Ablenkung eines Energiestrahls auf jeweilige Baumaterialschichten eingerichtet ist.

Die hierin beschriebene Vorrichtung umfasst mehrere Bestrahlungseinrichtungen. Jede Bestrahlungseinrichtung umfasst eine zur Erzeugung eines Energiestrahls, d. h. insbesondere eines Laserstrahls, definierbarer Energiestrahleigenschaften eingerichtete Energiestrahlerzeugungseinrichtung. Jede Bestrahlungseinrichtung kann ferner eine zur Ablenkung des durch die ihr eigene Energiestrahlerzeugungseinrichtung erzeugten Energiestrahls auf jeweilige selektiv zu bestrahlende bzw. selektiv zu verfestigende Bereiche jeweiliger Baumaterialschichten eingerichtete Energiestrahlablenkeinrichtung umfassen. Denkbar ist es auch, dass eine (einzige) Energiestrahlablenkeinrichtung den jeweiligen Energiestrahlerzeugungseinrichtungen unterschiedlicher Bestrahlungseinrichtungen zugeordnet ist, wobei die Energiestrahlablenkeinrichtung eingerichtet ist, die von den dieser zugeordneten Energiestrahlerzeugungseinrichtungen erzeugten Energiestrahlen auf jeweilige selektiv zu bestrahlende bzw. selektiv zu verfestigende Bereiche jeweiliger Baumaterialschichten abzulenken.

Die Vorrichtung umfasst eine hard- und/oder softwaremäßig implementierte Steuereinrichtung. Die Steuereinrichtung ist den Bestrahlungseinrichtungen steuerungstechnisch zuordenbar bzw. zugeordnet und zur Erzeugung von den Betrieb der Bestrahlungseinrichtungen steuernden Steuerinformationen sowie zur Steuerung des Betriebs der Bestrahlungseinrichtungen auf Grundlage entsprechend erzeugter Steuerinformationen eingerichtet. Die Steuerung des Betriebs jeweiliger Bestrahlungseinrichtungen beinhaltet insbesondere die Steuerung der Energiestrahleigenschaften eines erzeugten Energiestrahls, d. h. z. B. der Energiestrahlintensität und/oder des Energiestrahlstrahlfokusdurchmessers, sowie die Steuerung der Bewegungseigenschaften eines erzeugten Energiestrahls, d. h. z. B. einer Bewegungsbahn, entlang welcher sich ein Energiestrahl über eine selektiv zu verfestigende Baumaterialschicht bewegt, bzw. bestimmter im Zusammenhang mit einer Bewegung des Energiestrahls stehender Bewegungsparameter, wie z. B. der Bewegungsgeschwindigkeit, mit welcher ein Energiestrahl über eine selektiv zu verfestigende Baumaterialschicht bewegt wird.

Die Steuereinrichtung ist, wie sich im Weiteren ergibt, eingerichtet, unterschiedliche Steuerinformationen für unterschiedliche Bestrahlungseinrichtungen zu erzeugen, sodass sich die von unterschiedlichen Bestrahlungseinrichtungen erzeugten Energiestrahlen z. B. in einzelnen oder mehreren Energiestrahleigenschaften und/oder in einzelnen oder mehreren Bewegungseigenschaften unterscheiden.

Konkret ist die Steuereinrichtung eingerichtet, erste Steuerinformationen zur Steuerung des Betriebs wenigstens einer ersten Bestrahlungseinrichtung zu erzeugen, auf Grundlage welcher die erste Bestrahlungseinrichtung einen ersten Energiestrahl zur sukzessiven schichtweisen selektiven Verfestigung einer Baumaterialschicht erzeugt. Eine seitens der Steuereinrichtung als erste Bestrahlungseinrichtung definierte Bestrahlungseinrichtung ist auf Grundlage einer auf ersten Steuerinformationen basierenden Ansteuerung durch die Steuereinrichtung angesteuert bzw. betrieben, einen Energiestrahl zur sukzessiven schichtweisen selektiven Verfestigung einer Baumaterialschicht zu erzeugen. Selbstverständlich können seitens der Steuereinrichtung mehrere Bestrahlungseinrichtungen als erste Bestrahlungseinrichtungen definiert bzw. betrieben werden, welche sonach jeweils auf Grundlage einer auf ersten Steuerinformationen basierenden Ansteuerung durch die Steuereinrichtung angesteuert bzw. betrieben sind, einen Energiestrahl zur sukzessiven schichtweisen selektiven Verfestigung einer Baumaterialschicht zu erzeugen.

Die Steuereinrichtung ist weiter eingerichtet, zweite Steuerinformationen zur Steuerung des Betriebs wenigstens einer zweiten Bestrahlungseinrichtung zu erzeugen, auf Grundlage welcher die zweite Bestrahlungseinrichtung einen zweiten Energiestrahl zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl zur thermischen Nachbehandlung einer selektiv verfestigten Baumaterialschicht, insbesondere in einem selektiv verfestigten Bereich der Baumaterialschicht, erzeugt. Eine seitens der Steuereinrichtung als zweite Bestrahlungseinrichtung definierte Bestrahlungseinrichtung ist auf Grundlage einer auf zweiten Steuerinformationen basierenden Ansteuerung durch die Steuereinrichtung angesteuert bzw. betrieben, einen Energiestrahl zur thermischen Vorbehandlung einer selektiv zu verfestigenden Baumaterialschicht, insbesondere in einem selektiv zu verfestigenden Bereich der Baumaterialschicht, und/oder einen Energiestrahl zur thermischen Nachbehandlung einer selektiv verfestigten Baumaterialschicht, insbesondere in einem selektiv verfestigten Bereich der Baumaterialschicht, zu erzeugen. Selbstverständlich können seitens der Steuereinrichtung mehrere Bestrahlungseinrichtungen als zweite Bestrahlungseinrichtungen definiert bzw. betrieben werden, welche sonach jeweils auf Grundlage einer auf zweiten Steuerinformationen basierenden Ansteuerung durch die Steuereinrichtung angesteuert sind, einen Energiestrahl zur thermischen Vorbehandlung einer selektiv zu verfestigenden Baumaterialschicht und/oder zur thermischen Nachbehandlung einer selektiv verfestigten Baumaterialschicht zu erzeugen.

Die Vorrichtung ermöglicht es auf Grundlage entsprechender durch die Steuereinrichtung erzeugter Steuerinformationen sonach, unterschiedliche Bestrahlungseinrichtungen gezielt mit unterschiedlichen Funktionen "zu belegen". Wenigstens eine Bestrahlungseinrichtung kann dabei als erste Bestrahlungseinrichtung definiert bzw. betrieben werden, sodass diese einen Energiestrahl zur selektiven Verfestigung einer Baumaterialschicht erzeugt, wenigstens eine andere Bestrahlungseinrichtung kann dabei als zweite Bestrahlungseinrichtung definiert bzw. betrieben werden, sodass diese einen Energiestrahl zur thermischen Vor- bzw. Nachbehandlung einer Baumaterialschicht erzeugt. Eine thermische Vor- bzw. Nachbehandlung einer Baumaterialschicht wird im Folgenden auch als Temperierung einer Baumaterialschicht bezeichnet.

Die derart eröffnete Möglichkeit der Verwendung von Bestrahlungseinrichtungen der Vorrichtung zur Temperierung von Baumaterialschichten erlaubt eine gezielte und lokale Temperierung von Baumaterialschichten sowie eine gezielte Steuerung der Aufheiz- und Abkühlbedingungen respektive eine gezielte Steuerung der Aufschmelz- und Erstarrungsbedingungen des Baumaterials, welche mit bis dato üblichen Heizelementen nicht möglich ist. Über die gezielte Steuerung der Aufheiz- und Abkühlbedingungen respektive der Aufschmelz- und Erstarrungsbedingungen lässt sich - da derart z. B. ein bestimmtes Gefüge eingestellt werden kann - aktiv Einfluss auf die strukturellen Eigenschaften eines herzustellenden Objekts nehmen. Gleichermaßen ist eine Vortrocknung des Baumaterials möglich.

Die Möglichkeit der Verwendung von Bestrahlungseinrichtungen zur Temperierung von Baumaterialschichten erlaubt ferner, dass zur Temperierung einer Baumaterialschicht erheblich weniger Energie aufgebracht werden muss, da keine dauerhafte und langwierige Temperierung des gesamten in der Baukammer befindlichen Baumaterials notwendig ist.

Durch die gezielte lokale Temperierung einer Baumaterialschicht ist zudem die bisher übliche thermische Belastung der Baukammer, mit der Baukammer thermisch gekoppelter Funktionskomponenten der Vorrichtung sowie innerhalb der Baukammer befindlicher bereits additiv aufgebauter Objektabschnitte auf ein Minimum reduziert, da der Eintrag von thermischer Energie zur Temperierung des Baumaterials auf die zu temperierenden Baumaterialbereiche beschränkt werden kann. Auch die thermische Belastung des gegebenenfalls wieder zu verwendeten bzw. wieder zu verwerteten, nicht verfestigten Baumaterials ist auf ein Minimum reduziert. Das Baumaterial wird sonach keiner dauerhaften Temperierung ausgesetzt, welche, wie anhand von Untersuchungen gezeigt werden konnte, zu einem unerwünschten Anstieg des Sauerstoffgehalts in dem Baumaterial führen kann. Überdies ist die Ausbildung von Temperaturgradienten innerhalb von oder zwischen unterschiedlichen Funktionskomponenten der Vorrichtung auf ein Minimum reduziert, sodass ein auf unterschiedliche Wärmeausdehnungen von Funktionskomponenten zurückzuführendes "Wandern" einzelner Funktionskomponenten nicht bzw. kaum möglich ist.

Insgesamt liegt damit eine gegenüber dem eingangs beschriebenen Stand der Technik verbesserte Vorrichtung vor.

Bevor auf weitere Ausführungsformen der Vorrichtung bzw. des mit dieser implementierbaren Verfahrens eingegangen wird, ist anzumerken, dass eine jeweilige Definition der Bestrahlungseinrichtungen als erste oder zweite Bestrahlungseinrichtung typischerweise variierbar, d. h. keinesfalls fest vorgegeben, ist. Die Steuereinrichtung kann sonach eingerichtet sein, wenigstens eine bestimmte Bestrahlungseinrichtung im Rahmen der selektiven Verfestigung einer ersten Baumaterialschicht als erste Bestrahlungseinrichtung zu definieren und entsprechend zu betreiben und dieselbe Bestrahlungseinrichtung im Rahmen der selektiven Verfestigung einer zu der ersten Baumaterialschicht unterschiedlichen weiteren Baumaterialschicht als zweite Bestrahlungseinrichtung zu definieren und entsprechend zu betreiben. Auch kann die Steuereinrichtung eingerichtet sein, wenigstens eine bestimmte Bestrahlungseinrichtung im Rahmen der selektiven Verfestigung eines ersten Bereichs einer Baumaterialschicht als erste Bestrahlungseinrichtung zu definieren und entsprechend zu betreiben und dieselbe Bestrahlungseinrichtung im Rahmen der selektiven Verfestigung eines zu dem ersten Bereich der Baumaterialschicht unterschiedlichen weiteren Bereich der Baumaterialschicht als zweite Bestrahlungseinrichtung zu definieren und entsprechend zu betreiben. Eine Bestrahlungseinrichtung kann im Rahmen der Abarbeitung ein und desselben Bauprozesses sonach ein- oder mehrmals als erste Bestrahlungseinrichtung, d. h. zur selektiven Verfestigung einer Baumaterialschicht, und ein- oder mehrmals als zweite Bestrahlungseinrichtung, d. h. zur Temperierung einer Baumaterialschicht, verwendet werden.

Wenn im Weiteren von einer "ersten Bestrahlungseinrichtung" die Rede ist, ist hierunter eine seitens der Steuereinrichtung zumindest zeitweise als erste Bestrahlungseinrichtung angesteuerte bzw. betriebene Bestrahlungseinrichtung der Vorrichtung zu verstehen. In analoger Weise ist, wenn im Weiteren von einer "zweiten Bestrahlungseinrichtung" die Rede ist, hierunter eine seitens der Steuereinrichtung zumindest zeitweise als zweite Bestrahlungseinrichtung angesteuerte bzw. betriebene Bestrahlungseinrichtung der Vorrichtung zu verstehen.

Die Steuereinrichtung kann wie sich im Weiteren ergibt, eingerichtet sein, zweite Steuerinformationen zu erzeugen, auf Grundlage welcher der durch eine zweite Bestrahlungseinrichtung erzeugte zweite Energiestrahl entlang der gleichen oder einer ungleichen Bewegungsbahn über eine selektiv zu verfestigende oder verfestigte Baumaterialschicht führbar oder geführt ist wie der durch eine erste Bestrahlungseinrichtung erzeugte erste Energiestrahl. Eine zweite Bestrahlungseinrichtung kann sonach eingerichtet sein, einen zweiten Energiestrahl zu erzeugen, welcher entlang der gleichen oder einer ungleichen Bewegungsbahn über eine selektiv zu verfestigende oder verfestigte Baumaterialschicht führbar oder geführt ist wie der durch eine erste Bestrahlungseinrichtung erzeugte erste Energiestrahl.

Die Steuereinrichtung kann insbesondere eingerichtet sein, zweite Steuerinformationen zu erzeugen, auf Grundlage welcher ein durch eine zweite Bestrahlungseinrichtung erzeugter zweiter Energiestrahl einem durch eine erste Bestrahlungseinrichtung erzeugten ersten Energiestrahl mit einem definierbaren oder definierten, insbesondere synchronisierten, örtlichen und/oder zeitlichen Vor- oder Nachlauf vor- oder nachlaufend entlang derselben Bewegungsbahn über eine selektiv zu verfestigende oder verfestigte Baumaterialschicht führbar oder geführt ist wie der durch die erste Bestrahlungseinrichtung erzeugte erste Energiestrahl. Eine zweite Bestrahlungseinrichtung kann sonach eingerichtet sein, einen zweiten Energiestrahl zu erzeugen, welcher einem durch eine erste Bestrahlungseinrichtung erzeugten ersten Energiestrahl vor- oder nachlaufend entlang derselben Bewegungsbahn über eine selektiv zu verfestigende oder verfestigte Baumaterialschicht geführt ist wie der durch die erste Bestrahlungseinrichtung erzeugte erste Energiestrahl.

Mithin kann wenigstens ein zweiter Energiestrahl einem ersten Energiestrahl mit einem bestimmten örtlichen und/oder zeitlichen Vorlauf vorlaufend entlang derselben Bewegungsbahn über eine Baumaterialschicht geführt werden, wodurch sich, etwa zum Zwecke der kontrollierten Beeinflussung bzw. Steuerung des Aufheiz- bzw. Aufschmelzverhaltens des Baumaterials, eine, insbesondere durch den konkreten örtlichen und/oder zeitlichen Vorlauf des zweiten Energiestrahls, gezielt steuerbare Vortemperierung des vermittels des ersten Energiestrahls zu verfestigenden Baumaterials ergibt. Eine entsprechende Vortemperierung ermöglicht im Allgemeinen ein (lokales) Vorheizen des Baumaterials, welche z. B. eine Verarbeitung, insbesondere hochschmelzender, Baumaterialien bzw. eine Trocknung des Baumaterials erlaubt.

Alternativ oder ergänzend kann wenigstens ein zweiter Energiestrahl einem ersten Energiestrahl mit einem bestimmten örtlichen und/oder zeitlichen Nachlauf nachlaufend entlang der gleichen Bewegungsbahn über eine Baumaterialschicht geführt werden, wodurch sich, etwa zum Zwecke der kontrollierten Beeinflussung bzw. Steuerung des Abkühl- bzw. Erstarrungsverhaltens des Baumaterials, eine, insbesondere durch den konkreten örtlichen und/oder zeitlichen Nachlauf des zweiten Energiestrahls, gezielt steuerbare Nachtemperierung des vermittels des ersten Energiestrahls verfestigten Baumaterials ergibt. Eine entsprechende Nachtemperierung ermöglicht im Allgemeinen eine Reduzierung, gegebenenfalls zu einer Rissbildung führender mechanischer Spannungen sowie, insbesondere durch Diffusion von Gasporen, der Gas- bzw. Wasserstoffporosität in dem Objekt.

Analoges gilt für den Fall, in dem die Vorrichtung mehrere als zweite Bestrahlungseinrichtungen betreibbare oder betriebene Bestrahlungseinrichtungen umfasst. In diesem Fall kann die Steuereinrichtung eingerichtet sein, zweite Steuerinformationen zu erzeugen, auf Grundlage welcher die durch jeweilige zweite Bestrahlungseinrichtungen erzeugten zweiten Energiestrahlen einem durch eine erste Bestrahlungseinrichtung erzeugten ersten Energiestrahl jeweils mit einem definierbaren oder definierten, insbesondere synchronisierten, örtlichen und/oder zeitlichen Vor- oder Nachlauf vor- oder nachlaufend entlang der gleichen Bewegungsbahn über eine selektiv zu verfestigende oder verfestigte Baumaterialschicht führbar oder geführt sind wie der durch die erste Bestrahlungseinrichtung erzeugte erste Energiestrahl. Die Vorrichtung kann sonach mehrere zweite Bestrahlungseinrichtungen umfassen, welche eingerichtet sind, mehrere zweite Energiestrahlen zu erzeugen, welche einem durch eine erste Bestrahlungseinrichtung erzeugten ersten Energiestrahl vor- oder nachlaufend entlang der gleichen Bewegungsbahn über eine selektiv zu verfestigende oder verfestigte Baumaterialschicht führbar oder geführt sind wie der durch die erste Bestrahlungseinrichtung erzeugte erste Energiestrahl.

Die Steuereinrichtung kann dabei eingerichtet sein, den in eine Baumaterialschicht einzubringenden oder eingebrachten Energieeintrag jeweiliger durch jeweilige zweite Bestrahlungseinrichtungen erzeugter zweiter Energiestrahlen in Abhängigkeit des örtlichen und/oder zeitlichen Vor- oder Nachlaufs der jeweiligen zweiten Energiestrahlen zu dem durch die erste Bestrahlungseinrichtung erzeugten ersten Energiestrahl zu steuern. Der über jeweilige zweite Energiestrahlen in die Baumaterialschicht einzubringende oder eingebrachte Energieeintrag ist sonach (nahezu) beliebig variierbar, sodass sich über eine Steuerung des jeweiligen Energieeintrags jeweiliger zweiter Energiestrahlen (nahezu) beliebige bzw. (nahezu) beliebig variierbare Temperaturprofile, d. h. z. B. gleich- oder ungleichmäßig ansteigende oder abfallende Temperaturrampen, realisieren lassen.

Beispielsweise kann der in eine Baumaterialschicht einzubringende oder eingebrachte Energieeintrag eines zweiten Energiestrahls, welcher im Vergleich einen größeren örtlichen und/oder zeitlichen Vor- oder Nachlauf zu einem über eine erste Bestrahlungseinrichtung erzeugten ersten Energiestrahl aufweist, geringer sein als der in die Baumaterialschicht einzubringende oder eingebrachte Energieeintrag eines weiteren zweiten Energiestrahls, welcher im Vergleich einen geringeren örtlichen und/oder zeitlichen Vor- oder Nachlauf zu dem durch die erste Bestrahlungseinrichtung erzeugten Energiestrahl aufweist. Derart ist eine beispielhafte Möglichkeit der Realisierung eines bestimmten Temperaturprofils gegeben, mit welchem die Aufheiz- bzw. Abkühleigenschaften des Baumaterials lokal gezielt beeinflusst werden können.

Vorstehend wurde eine Variante beschrieben, gemäß welcher eine Bewegung erster und zweiter Energiestrahlen in ein und derselben Bewegungsbahn erfolgt, wobei wenigstens ein zweiter Energiestrahl einem ersten Energiestrahl mit einem bestimmten örtlichen und/oder zeitlichen Vor- bzw. Nachlauf vor- bzw. nachlaufend geführt ist/wird.

Nachfolgend wird eine ebenso denkbare und insbesondere mit der zuvor Beschriebenen kombinierbare Variante beschrieben, gemäß welcher eine Bewegung erster und zweiter Energiestrahlen in unterschiedlichen Bewegungsbahnen erfolgt, wobei wenigstens ein zweiter Energiestrahl einem ersten Energiestrahl mit einem bestimmten örtlichen und/oder zeitlichen Versatz seitlich, insbesondere parallel, versetzt zu einem ersten Energiestrahl geführt ist/wird.

Die Steuereinrichtung kann sonach (alternativ oder ergänzend) eingerichtet sein, zweite Steuerinformationen zu erzeugen, auf Grundlage welcher der durch eine zweite Bestrahlungseinrichtung erzeugte zweite Energiestrahl mit einem definierbaren oder definierten örtlichen und/oder zeitlichen Versatz seitlich, insbesondere parallel, versetzt zu einer Bewegungsbahn, entlang welcher der von einer ersten Bestrahlungseinrichtung erzeugte erste Energiestrahl über eine selektiv zu verfestigende Baumaterialschicht führbar oder geführt ist, über die selektiv zu verfestigende oder verfestigte Baumaterialschicht führbar oder geführt ist. Eine zweite Bestrahlungseinrichtung kann sonach eingerichtet sein, einen zweiten Energiestrahl zu erzeugen, welcher seitlich versetzt zu dem durch eine erste Bestrahlungseinrichtung erzeugten ersten Energiestrahl, d. h. nicht in derselben Bewegungsbahn wie der durch die erste Bestrahlungseinrichtung erzeugte erste Energiestrahl, über eine selektiv zu verfestigende oder verfestigte Baumaterialschicht geführt ist.

Wenigstens ein zweiter Energiestrahl kann also mit einem bestimmten örtlichen und/oder zeitlichen Versatz seitlich versetzt zu der Bewegungsbahn eines ersten Energiestrahls über eine Baumaterialschicht geführt werden, wodurch sich gleichermaßen, etwa zum Zwecke der kontrollierten Beeinflussung bzw. Steuerung des Aufheiz- bzw. Aufschmelzverhaltens respektive des Abkühl- bzw. Erstarrungsverhaltens des Baumaterials, eine, insbesondere durch den konkreten örtlichen und/oder zeitlichen seitlichen Versatz des zweiten Energiestrahls, gezielt steuerbare Vor- bzw. Nachtemperierung des vermittels des ersten Energiestrahls zu verfestigenden bzw. verfestigten Baumaterials ergibt.

Analoges gilt wiederum für den Fall, in dem die Vorrichtung mehrere als zweite Bestrahlungseinrichtungen betreibbare oder betriebene Bestrahlungseinrichtungen umfasst. In diesem Fall kann die Steuereinrichtung eingerichtet sein, zweite Steuerinformationen zu erzeugen, auf Grundlage welcher die durch jeweilige zweite Bestrahlungseinrichtungen erzeugten zweiten Energiestrahlen mit einem definierbaren oder definierten örtlichen und/oder zeitlichen Versatz seitlich, insbesondere parallel, versetzt zu einer Bewegungsbahn, entlang welcher ein von einer ersten Bestrahlungseinrichtung erzeugter erster Energiestrahl über eine selektiv zu verfestigende Baumaterialschicht führbar oder geführt ist, über die selektiv zu verfestigende oder verfestigte Baumaterialschicht führbar oder geführt sind. Die Vorrichtung kann sonach mehrere zweite Bestrahlungseinrichtungen umfassen, welche eingerichtet sind, mehrere zweite Energiestrahlen zu erzeugen, welche in einer eigenen Bewegungsbahn seitlich zu dem durch eine erste Bestrahlungseinrichtung erzeugten ersten Energiestrahl versetzt über eine selektiv zu verfestigende oder verfestigte Baumaterialschicht führbar oder geführt sind.

Die Steuereinrichtung kann auch hier eingerichtet sein, den in eine Baumaterialschicht einzubringenden oder eingebrachten Energieeintrag jeweiliger durch jeweilige zweite Bestrahlungseinrichtungen erzeugter zweiter Energiestrahlen in Abhängigkeit des örtlichen und/oder zeitlichen Versatzes der jeweiligen zweiten Energiestrahlen zu der Bewegungsbahn des durch die erste Bestrahlungseinrichtung erzeugten ersten Energiestrahls zu steuern. Auch derart ist der über jeweilige zweite Energiestrahlen in die Baumaterialschicht einzubringende oder eingebrachte Energieeintrag (nahezu) beliebig variierbar, sodass sich über eine geeignete Steuerung des jeweiligen Energieeintrags jeweiliger zweiter Energiestrahlen (nahezu) beliebige bzw. (nahezu) beliebig variierbare Temperaturprofile, d. h. z. B. gleich- oder ungleichmäßig ansteigende oder abfallende Temperaturrampen, realisieren lassen.

Beispielsweise kann der in eine Baumaterialschicht einzubringende oder eingebrachte Energieeintrag eines zweiten Energiestrahls, welcher im Vergleich einen größeren örtlichen und/oder zeitlichen Versatz zu der Bewegungsbahn des durch die erste Bestrahlungseinrichtung erzeugten ersten Energiestrahls aufweist, geringer sein als der in die Baumaterialschicht einzubringende oder eingebrachte Energieeintrag eines weiteren zweiten Energiestrahls, welcher im Vergleich einen geringeren örtlichen und/oder zeitlichen Versatz zu der Bewegungsbahn des durch die erste Bestrahlungseinrichtung erzeugten Energiestrahls aufweist. Derart ist wiederum beispielhaft eine Möglichkeit der Realisierung eines bestimmten Temperaturprofils gegeben, mit welchem die Aufheiz- bzw. Abkühleigenschaften des Baumaterials lokal gezielt beeinflusst werden können.

Unabhängig davon, ob ein zweiter Energiestrahl diesem vor- oder nachlaufend oder mit einem seitlichen Versatz relativ zu einem ersten Energiestrahl geführt ist/wird, gilt, dass sich ein zweiter Energiestrahl in wenigstens einem den Energieeintrag des Energiestrahls in eine Baumaterialschicht beeinflussenden Energiestrahlparameter, von einem ersten Energiestrahl unterscheiden kann. Ein zweiter Energiestrahl kann sich z. B. in der Energiestrahlintensität und/oder dem Energiestrahlfokusdurchmesser, und/oder der Energiestrahlgeschwindigkeit, mit welcher der Energiestrahl über eine Baumaterialschicht geführt wird, von einem ersten Energiestrahl unterscheiden. Die Unterscheidung in dem Energieeintrag erfolgt typischerweise mit der Maßgabe, dass der Energieeintrag eines zweiten Energiestrahls so gering ist, dass ein Aufschmelzen von Baumaterial mit dem zweiten Energiestrahl nicht möglich ist. Mithin weist ein zweiter Energiestrahl typischerweise eine geringere Energiestrahlintensität und/oder einen größeren Energiestrahlfokusdurchmesser als ein erster Energiestrahl auf.

Die Vorrichtung kann eine Erfassungseinrichtung umfassen, welche zur Erfassung wenigstens einer Eigenschaft einer selektiv zu verfestigenden oder selektiv verfestigten Baumaterialschicht, insbesondere eines selektiv zu verfestigenden bzw. eines selektiv verfestigten Bereichs einer selektiv zu verfestigenden oder selektiv verfestigten Baumaterialschicht, und zur Erzeugung einer die wenigstens eine erfasste Eigenschaft der selektiv zu verfestigenden oder selektiv verfestigten Baumaterialschicht beschreibenden Erfassungsinformation eingerichtet ist. Bei einer entsprechenden Eigenschaft kann es sich z. B. um die Temperatur oder den Aggregatszustand, insbesondere den schmelzförmigen Zustand, eines selektiv zu verfestigenden bzw. eines selektiv verfestigten Bereichs handeln, sodass sich über die Erfassungseinrichtung ein lokales Schmelzbad ("Meltpool") erfassen lässt. Bei der Erfassungseinrichtung kann es sich z. B. um eine optische Erfassungseinrichtung, d. h. insbesondere um eine Kameraeinrichtung, handeln bzw. kann die Erfassungseinrichtung wenigstens eine solche umfassen.

Die Steuereinrichtung kann eingerichtet sein, wenigstens einen den Energieeintrag eines jeweiligen Energiestrahls in eine Baumaterialschicht beeinflussenden Energiestrahlparameter eines zweiten Energiestrahls in Abhängigkeit einer durch eine Erfassungsinformation beschriebenen Eigenschaft einer selektiv zu verfestigenden oder verfestigten Baumaterialschicht zu steuern. Durch jeweilige durch eine entsprechende Erfassungsinformation beschriebenen Eigenschaften einer Baumaterialschicht kann, insbesondere in Echtzeit, eine noch exakter kontrollierte Beeinflussung bzw. Steuerung des Aufheiz- bzw. Aufschmelzverhaltens respektive des Abkühl- bzw. Erstarrungsverhaltens der Baumaterialschicht vermittels eines oder mehrerer zweiter Energiestrahlen realisiert werden.

Die Erfindung betrifft neben der Vorrichtung ein Verfahren zur additiven Herstellung dreidimensionaler Objekte durch sukzessives schichtweises selektives Bestrahlen und damit einhergehendes sukzessives schichtweises selektives Verfestigen von Baumaterialschichten aus einem vermittels eines Energiestrahls, insbesondere eines Laserstrahls, verfestigbaren Baumaterial, wobei mehrere Bestrahlungseinrichtungen, welche jeweils zur Erzeugung wenigstens eines Energiestrahls definierbarer Energiestrahleigenschaften eingerichtet sind, verwendet werden. Das Verfahren zeichnet sich dadurch aus, dass wenigstens eine erste Bestrahlungseinrichtung auf Grundlage von durch eine Steuereinrichtung erzeugten ersten Steuerinformationen zur Erzeugung eines ersten Energiestrahls zur sukzessiven schichtweisen selektiven Verfestigung einer Baumaterialschicht betrieben wird, und wenigstens eine zweite Bestrahlungseinrichtung auf Grundlage von durch eine Steuereinrichtung erzeugten zweiten Steuerinformationen zur Erzeugung eines zweiten Energiestrahls zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl zur thermischen Nachbehandlung einer selektiv verfestigten Baumaterialschicht, insbesondere in einem selektiv verfestigten Bereich der Baumaterialschicht betrieben wird. Das Verfahren, bei welchem es sich z. B. um ein selektives Laserschmelzverfahren (abgekürzt SLM-Verfahren), um ein selektives Lasersinterverfahren (abgekürzt SLS-Verfahren),oder um ein selektives Elektronenstrahlschmelzverfahren (abgekürzt SEBS-Verfahren) handeln kann, kann mit einer wie beschriebenen Vorrichtung durchgeführt werden. Sämtliche Ausführungen im Zusammenhang mit der Vorrichtung gelten analog für das Verfahren und umgekehrt.

Die Erfindung ist anhand von Ausführungsbeispielen in den Zeichnungen näher erläutert. Dabei zeigt:
- Fig. 1: eine Prinzipdarstellung einer Vorrichtung gemäß einem Ausführungsbeispiel; und
- Fig. 2 - 5: je eine Prinzipdarstellung mehrerer über eine Baumaterialschicht geführter Energiestrahlen.

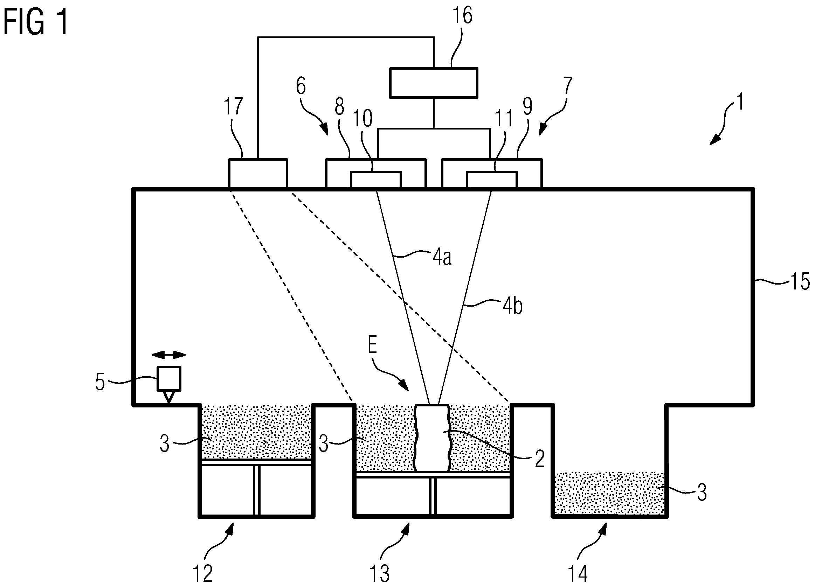

Fig. 1 zeigt eine Prinzipdarstellung einer Vorrichtung 1 gemäß einem Ausführungsbeispiel. Die Vorrichtung 1 dient der additiven Herstellung dreidimensionaler Objekte 2, d. h. insbesondere technischer Bauteile bzw. technischer Bauteilgruppen, durch sukzessives schichtweises selektives Bestrahlen und damit einhergehendes sukzessives schichtweises selektives Verfestigen von Baumaterialschichten aus einem verfestigbaren Baumaterial 3, d. h. z. B. eines Metallpulvers, vermittels eines Energiestrahls, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" Daten des herzustellenden Objekts 2 beinhalten. Die Vorrichtung 1 kann z. B. als Laser-CUSINGO-Vorrichtung, d. h. als Vorrichtung zur Durchführung selektiver Laserschmelzverfahren (abgekürzt SLM-Verfahren), ausgebildet sein.

Die Vorrichtung 1 umfasst als eine Funktionskomponente zur Durchführung additiver Bauvorgänge eine Beschichtungseinrichtung 5. Die Beschichtungseinrichtung 5 ist zur Ausbildung selektiv zu bestrahlender bzw. selektiv zu verfestigender Baumaterialschichten in einer Bauebene E der Vorrichtung 1 eingerichtet und umfasst hierzu ein relativ zu einer Bauebene E der Vorrichtung 1 bewegbar gelagertes, insbesondere klingenartiges bzw. -förmiges, Beschichtungselement (nicht näher bezeichnet).

Die Vorrichtung 1 umfasst als weitere Funktionskomponenten zur Durchführung additiver Bauvorgänge mehrere, d. h. in dem in Fig. 1 gezeigten Ausführungsbeispiel beispielhaft zwei, Bestrahlungseinrichtungen 6, 7. Jede Bestrahlungseinrichtung 6, 7 umfasst eine zur Erzeugung eines Energiestrahls 4a, 4b, d. h. insbesondere eines Laserstrahls, definierbarer Energiestrahleigenschaften eingerichtete Energiestrahlerzeugungseinrichtung 8, 9 und eine mit dieser optisch gekoppelte zur Ablenkung eines Energiestrahls 4a, 4b auf jeweilige Baumaterialschichten eingerichtete Energiestrahlablenkeinrichtung 10, 11 umfassen. Denkbar wäre es auch, dass eine (einzige) Energiestrahlablenkeinrichtung den jeweiligen Energiestrahlerzeugungseinrichtungen 8, 9 unterschiedlicher Bestrahlungseinrichtungen 6, 7 zugeordnet ist.

In dem in Fig. 1 gezeigten Ausführungsbeispiel ist ferner ein Dosiermodul 12, ein Baumodul 13 und ein Überlaufmodul 14 dargestellt, welche an einen unteren Bereich einer inertisierbaren Prozesskammer 15 der Vorrichtung 1 angedockt sind. Die genannten Module können auch einen unteren Bereich der Prozesskammer 15 der Vorrichtung 1 bilden.

Die Vorrichtung 1 umfasst eine den Bestrahlungseinrichtungen 6, 7 steuerungstechnisch zugeordnete, hard- und/oder softwaremäßig implementierte Steuereinrichtung 16. Die Steuereinrichtung 16 ist zur Erzeugung von den Betrieb der Bestrahlungseinrichtungen 6, 7 steuernden Steuerinformationen sowie zur Steuerung des Betriebs der Bestrahlungseinrichtungen 6, 7 auf Grundlage entsprechend erzeugter Steuerinformationen eingerichtet. Die Steuerung des Betriebs jeweiliger Bestrahlungseinrichtungen 6, 7 beinhaltet insbesondere die Steuerung der Energiestrahlsowie der Bewegungseigenschaften eines über eine jeweilige Bestrahlungseinrichtung 6, 7 erzeugten Energiestrahls 4a, 4b. Die Steuereinrichtung 16 ist eingerichtet, unterschiedliche Steuerinformationen für unterschiedliche Bestrahlungseinrichtungen 6, 7 zu erzeugen, sodass sich die von unterschiedlichen Bestrahlungseinrichtungen 6, 7 erzeugten Energiestrahlen 4a, 4b z. B. in einzelnen oder mehreren Energiestrahleigenschaften und/oder in einzelnen oder mehreren Bewegungseigenschaften unterscheiden.

Die Steuereinrichtung 16 ist eingerichtet, erste Steuerinformationen zur Steuerung des Betriebs einer ersten Bestrahlungseinrichtung, d. h. z. B. der in der Fig. linken Bestrahlungseinrichtung 6, zu erzeugen, auf Grundlage welcher die erste Bestrahlungseinrichtung einen ersten Energiestrahl 4a zur sukzessiven schichtweisen selektiven Verfestigung einer Baumaterialschicht erzeugt. Die seitens der Steuereinrichtung 16 als erste Bestrahlungseinrichtung definierte Bestrahlungseinrichtung 6 ist auf Grundlage der auf ersten Steuerinformationen basierenden Ansteuerung durch die Steuereinrichtung 16 angesteuert bzw. betrieben, einen Energiestrahl 4a zur sukzessiven schichtweisen selektiven Verfestigung einer Baumaterialschicht zu erzeugen.

Die Steuereinrichtung 16 ist weiter eingerichtet, zweite Steuerinformationen zur Steuerung des Betriebs wenigstens einer zweiten Bestrahlungseinrichtung, d. h. z. B. der in der Fig. rechten Bestrahlungseinrichtung 7, zu erzeugen, auf Grundlage welcher die zweite Bestrahlungseinrichtung einen zweiten Energiestrahl 4b zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl 4b zur thermischen Nachbehandlung einer selektiv verfestigten Baumaterialschicht, insbesondere in einem selektiv verfestigten Bereich der Baumaterialschicht, erzeugt. Die seitens der Steuereinrichtung 16 als zweite Bestrahlungseinrichtung definierte Bestrahlungseinrichtung 7 ist auf Grundlage der auf zweiten Steuerinformationen basierenden Ansteuerung durch die Steuereinrichtung 16 angesteuert bzw. betrieben, einen Energiestrahl 4b zur thermischen Vorbehandlung einer selektiv zu verfestigenden Baumaterialschicht, insbesondere in einem selektiv zu verfestigenden Bereich der Baumaterialschicht, und/oder einen Energiestrahl 4b zur thermischen Nachbehandlung einer selektiv verfestigten Baumaterialschicht, insbesondere in einem selektiv verfestigten Bereich der Baumaterialschicht, zu erzeugen.

Die Vorrichtung 1 ermöglicht es auf Grundlage entsprechender durch die Steuereinrichtung 16 erzeugter Steuerinformationen sonach, unterschiedliche Bestrahlungseinrichtungen 6, 7 gezielt mit unterschiedlichen Funktionen "zu belegen". Eine (oder mehrere) Bestrahlungseinrichtung 6 kann dabei als erste Bestrahlungseinrichtung definiert bzw. betrieben werden, sodass diese einen Energiestrahl 4a zur selektiven Verfestigung einer Baumaterialschicht erzeugt, eine (oder mehrere)) andere Bestrahlungseinrichtung 7 kann dabei als zweite Bestrahlungseinrichtung definiert bzw. betrieben werden, sodass diese einen Energiestrahl 4b zur thermischen Vor- bzw. Nachbehandlung ("Temperierung") einer Baumaterialschicht erzeugt.

Die derart eröffnete Möglichkeit der Verwendung einer Bestrahlungseinrichtung, d. h. z. B. der Bestrahlungseinrichtung 7, zur Temperierung von Baumaterialschichten erlaubt eine gezielte und lokale Temperierung von Baumaterialschichten sowie eine gezielte Steuerung der Aufheiz- und Abkühlbedingungen respektive eine gezielte Steuerung der Aufschmelz- und Erstarrungsbedingungen des Baumaterials 3. Über die gezielte Steuerung der Aufheiz- und Abkühlbedingungen respektive der Aufschmelz- und Erstarrungsbedingungen lässt sich - da derart z. B. ein bestimmtes Gefüge eingestellt werden kann - aktiv Einfluss auf die strukturellen Eigenschaften eines herzustellenden Objekts 2 nehmen.

Eine jeweilige Definition der Bestrahlungseinrichtungen 6, 7 als erste oder zweite Bestrahlungseinrichtung ist variierbar, d. h. keinesfalls fest vorgegeben. Die Steuereinrichtung 16 ist sonach eingerichtet, eine bestimmte Bestrahlungseinrichtung 6, 7 im Rahmen der selektiven Verfestigung einer ersten Baumaterialschicht als erste Bestrahlungseinrichtung zu definieren und entsprechend zu betreiben und dieselbe Bestrahlungseinrichtung 6, 7 im Rahmen der selektiven Verfestigung einer zu der ersten Baumaterialschicht unterschiedlichen weiteren Baumaterialschicht als zweite Bestrahlungseinrichtung zu definieren und entsprechend zu betreiben. Auch ist die Steuereinrichtung 16 eingerichtet, eine bestimmte Bestrahlungseinrichtung 6, 7 im Rahmen der selektiven Verfestigung eines ersten Bereichs einer Baumaterialschicht als erste Bestrahlungseinrichtung zu definieren und entsprechend zu betreiben und dieselbe Bestrahlungseinrichtung 6, 7 im Rahmen der selektiven Verfestigung eines zu dem ersten Bereich der Baumaterialschicht unterschiedlichen weiteren Bereich der Baumaterialschicht als zweite Bestrahlungseinrichtung zu definieren und entsprechend zu betreiben. Eine Bestrahlungseinrichtung 6, 7 kann im Rahmen der Abarbeitung ein und desselben Bauprozesses sonach ein- oder mehrmals als erste Bestrahlungseinrichtung, d. h. zur selektiven Verfestigung einer Baumaterialschicht, und ein- oder mehrmals als zweite Bestrahlungseinrichtung, d. h. zur Temperierung einer Baumaterialschicht, verwendet werden.

Wenn im Weiteren von einer "ersten Bestrahlungseinrichtung" die Rede ist, ist hierunter eine seitens der Steuereinrichtung 16 zumindest zeitweise als erste Bestrahlungseinrichtung angesteuerte bzw. betriebene Bestrahlungseinrichtung 6 7 zu verstehen. In analoger Weise ist, wenn im Weiteren von einer "zweiten Bestrahlungseinrichtung" die Rede ist, hierunter eine seitens der Steuereinrichtung 16 zumindest zeitweise als zweite Bestrahlungseinrichtung angesteuerte bzw. betriebene Bestrahlungseinrichtung 6, 7 zu verstehen.

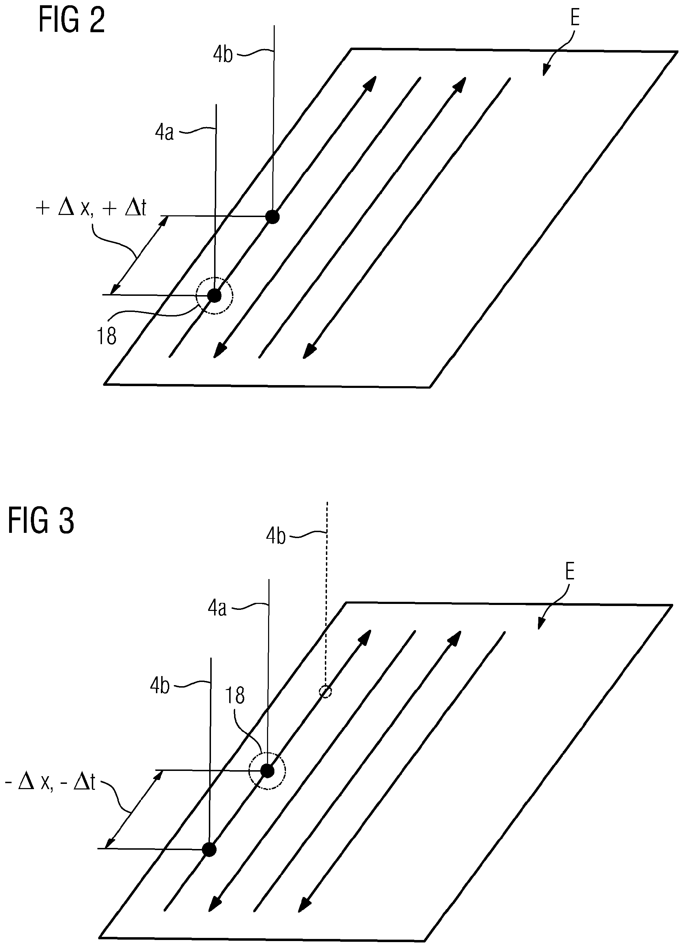

Wie anhand der jeweils eine Prinzipdarstellung mehrerer über eine Baumaterialschicht geführter Energiestrahlen 4a, 4b zeigender Fig. 2 ff ersichtlich ist, ist die Steuereinrichtung 16 eingerichtet, zweite Steuerinformationen zu erzeugen, auf Grundlage welcher ein durch eine zweite Bestrahlungseinrichtung erzeugter zweiter Energiestrahl 4b einem ersten Energiestrahl 4a mit einem definierten, insbesondere synchronisierten, örtlichen und/oder zeitlichen Vorlauf (vgl. Fig. 2) oder Nachlauf (vgl. Fig. 3) vor- oder nachlaufend entlang derselben Bewegungsbahn (vgl. die durch die Pfeile angedeuteten Bewegungsvektoren) über die Baumaterialschicht geführt ist wie der erste Energiestrahl 4a. Ein zweiter Energiestrahl 4b kann einem ersten Energiestrahl 4a sonach mit einem bestimmten örtlichen und/oder zeitlichen Vorlauf (in Fig. 2 durch die Symbole "+Δx" für den örtlichen Vorlauf und "+Δt" für den zeitlichen Vorlauf angedeutet) vorlaufend entlang derselben Bewegungsbahn über eine Baumaterialschicht geführt werden, wodurch sich, etwa zum Zwecke der kontrollierten Beeinflussung bzw. Steuerung des Aufheiz- bzw. Aufschmelzverhaltens des Baumaterials 3, eine, insbesondere durch den konkreten örtlichen und/oder zeitlichen Vorlauf des zweiten Energiestrahls 4b, gezielt steuerbare Vortemperierung des vermittels des ersten Energiestrahls 4a zu verfestigenden Baumaterials 3 ergibt. Ein entsprechender Vorlauf ist in Fig. 2 gezeigt.

Alternativ oder ergänzend kann ein zweiter Energiestrahl 4b einem ersten Energiestrahl 4a mit einem bestimmten örtlichen und/oder zeitlichen Nachlauf (in Fig. 3 durch die Symbole "-Δx" für den örtlichen Vorlauf und "-Δt" für den zeitlichen Nachlauf angedeutet) nachlaufend entlang derselben Bewegungsbahn über eine Baumaterialschicht geführt werden, wodurch sich, etwa zum Zwecke der kontrollierten Beeinflussung bzw. Steuerung des Abkühl- bzw. Erstarrungsverhaltens des Baumaterials 3, eine, insbesondere durch den konkreten örtlichen und/oder zeitlichen Nachlauf des zweiten Energiestrahls 4b, gezielt steuerbare Nachtemperierung des vermittels des ersten Energiestrahls 4a verfestigten Baumaterials 3 ergibt. Ein entsprechender Nachlauf ist in Fig. 3 gezeigt, wobei strichliert dargestellt ist, dass hier optional zusätzlich auch ein entsprechender Vorlauf möglich wäre.

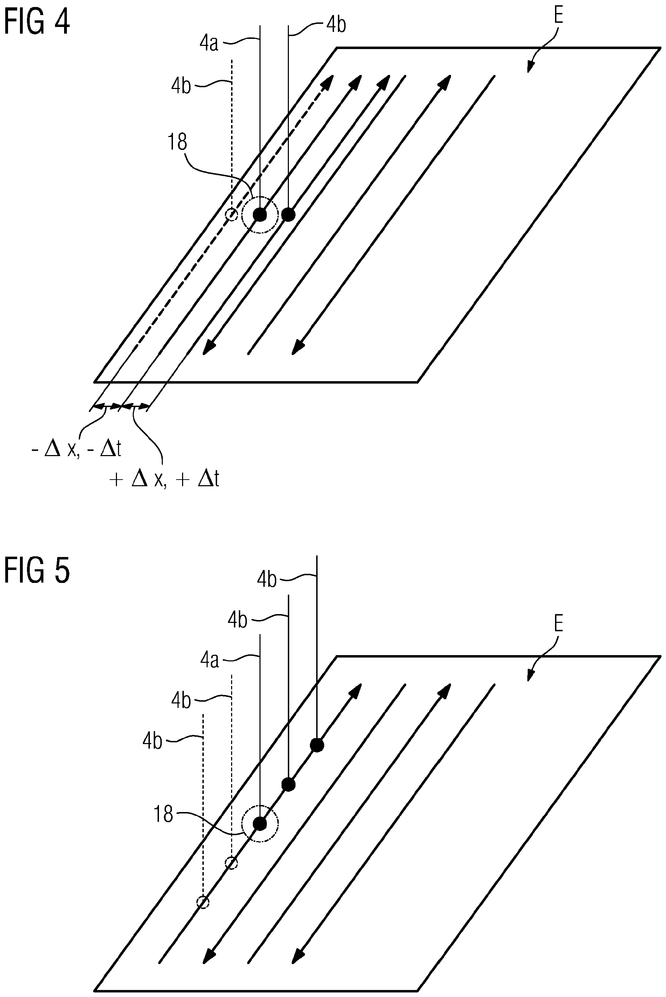

Analoges gilt für den in Fig. 5 dargestellten Fall, in dem die Vorrichtung 1 mehrere als zweite Bestrahlungseinrichtungen betreibbare oder betriebene Bestrahlungseinrichtungen 6, 7 umfasst. In diesem Fall ist die Steuereinrichtung 16 eingerichtet, zweite Steuerinformationen zu erzeugen, auf Grundlage welcher die durch jeweilige zweite Bestrahlungseinrichtungen erzeugten zweiten Energiestrahlen 4b einem ersten Energiestrahl 4a jeweils mit einem definierten, insbesondere synchronisierten, örtlichen und/oder zeitlichen Vor- oder Nachlauf vor- oder nachlaufend entlang der gleichen Bewegungsbahn über eine Baumaterialschicht führbar oder geführt sind wie der erste Energiestrahl 4a. Analog zu Fig. 3 ist hier ein optionaler Nachlauf strichliert dargestellt.

Die Steuereinrichtung 16 kann dabei eingerichtet sein, den in eine Baumaterialschicht eingebrachten Energieeintrag jeweiliger durch jeweilige zweite Bestrahlungseinrichtungen erzeugter zweiter Energiestrahlen 4b in Abhängigkeit des örtlichen und/oder zeitlichen Vor- oder Nachlaufs der jeweiligen zweiten Energiestrahlen 4b zu dem durch die erste Bestrahlungseinrichtung erzeugten ersten Energiestrahl 4a zu steuern. Der über jeweilige zweite Energiestrahlen 4b in die Baumaterialschicht eingebrachte Energieeintrag ist sonach (nahezu) beliebig variierbar, sodass sich über eine Steuerung des jeweiligen Energieeintrags jeweiliger zweiter Energiestrahlen (nahezu) beliebige bzw. (nahezu) beliebig variierbare Temperaturprofile, d. h. z. B. gleich- oder ungleichmäßig ansteigende oder abfallende Temperaturrampen, realisieren lassen.

In Fig. 4 ist eine ebenso denkbare Variante beschrieben, gemäß welcher eine Bewegung erster und zweiter Energiestrahlen 4a, 4b in unterschiedlichen Bewegungsbahnen erfolgt, wobei wenigstens ein zweiter Energiestrahl 4b einem ersten Energiestrahl 4a mit einem bestimmten örtlichen und/oder zeitlichen Versatz (in Fig. 4 durch die Symbole "+Δx" für den örtlichen Versatz und "+Δt" für den zeitlichen Versatz rechts der Bewegungsbahn des ersten Energiestrahls 4a und durch die Symbole "-Δx" für den örtlichen Versatz und "-Δt" für den zeitlichen Versatz links der Bewegungsbahn des ersten Energiestrahls 4a angedeutet) seitlich, insbesondere parallel, versetzt zu einem ersten Energiestrahl 4a geführt ist/wird.

Die Steuereinrichtung 16 kann sonach eingerichtet sein, zweite Steuerinformationen zu erzeugen, auf Grundlage welcher ein durch eine zweite Bestrahlungseinrichtung erzeugter zweiter Energiestrahl 4b mit einem definierten örtlichen und/oder zeitlichen Versatz seitlich, insbesondere parallel, versetzt zu einer Bewegungsbahn, entlang welcher ein erster Energiestrahl 4a über eine Baumaterialschicht geführt ist, über die Baumaterialschicht geführt ist. Ein zweiter Energiestrahl 4b kann also mit einem bestimmten örtlichen und/oder zeitlichen Versatz seitlich versetzt zu der Bewegungsbahn eines ersten Energiestrahls 4a über eine Baumaterialschicht geführt werden, wodurch sich gleichermaßen, etwa zum Zwecke der kontrollierten Beeinflussung bzw. Steuerung des Aufheiz- bzw. Aufschmelzverhaltens respektive des Abkühl- bzw. Erstarrungsverhaltens des Baumaterials 3, eine, insbesondere durch den konkreten örtlichen und/oder zeitlichen seitlichen Versatz des zweiten Energiestrahls 4b, gezielt steuerbare Vor- bzw. Nachtemperierung des vermittels des ersten Energiestrahls 4a zu verfestigenden bzw. verfestigten Baumaterials 3 ergibt.

Analoges gilt wiederum für den Fall, in dem die Vorrichtung 1 mehrere als zweite Bestrahlungseinrichtungen betreibbare oder betriebene Bestrahlungseinrichtungen 6, 7 umfasst. In diesem Fall ist die Steuereinrichtung 16 eingerichtet, zweite Steuerinformationen zu erzeugen, auf Grundlage welcher die durch jeweilige zweite Bestrahlungseinrichtungen erzeugten zweiten Energiestrahlen 4b mit einem definierten örtlichen und/oder zeitlichen Versatz seitlich, insbesondere parallel, versetzt zu einer Bewegungsbahn, entlang welcher ein erster Energiestrahl 4a über eine Baumaterialschicht geführt ist, über die Baumaterialschicht geführt sind.

Die Steuereinrichtung 16 kann auch hier eingerichtet sein, den in eine Baumaterialschicht eingebrachten Energieeintrag jeweiliger zweiter Energiestrahlen 4b in Abhängigkeit des örtlichen und/oder zeitlichen Versatzes der jeweiligen zweiten Energiestrahlen 4b zu der Bewegungsbahn des ersten Energiestrahls 4a zu steuern. Auch derart ist der über jeweilige zweite Energiestrahlen 4b in die Baumaterialschicht eingebrachte Energieeintrag (nahezu) beliebig variierbar, sodass sich über eine geeignete Steuerung des jeweiligen Energieeintrags jeweiliger zweiter Energiestrahlen 4b (nahezu) beliebige bzw. (nahezu) beliebig variierbare Temperaturprofile, d. h. z. B. gleich- oder ungleichmäßig ansteigende oder abfallende Temperaturrampen, realisieren lassen.

Allgemein gilt, dass sich ein zweiter Energiestrahl 4b in wenigstens einem den Energieeintrag des Energiestrahls 4b in eine Baumaterialschicht beeinflussenden Energiestrahlparameter, von einem ersten Energiestrahl 4a unterscheidet. Der zweite Energiestrahl 4b kann sich z. B. in der Energiestrahlintensität und/oder dem Energiestrahlfokusdurchmesser, und/oder der Energiestrahlgeschwindigkeit, mit welcher der Energiestrahl 4b über eine Baumaterialschicht geführt wird, von dem ersten Energiestrahl 4a unterscheiden. Die Unterscheidung in dem jeweiligen Energieeintrag erfolgt typischerweise mit der Maßgabe, dass der Energieeintrag eines zweiten Energiestrahls 4b so gering ist, dass ein Aufschmelzen von Baumaterial 3 mit dem zweiten Energiestrahl 4b nicht möglich ist.

Zurückkommend auf Fig. 1 ist ersichtlich, dass die Vorrichtung 1 eine z. B. als Kameraeinrichtung ausgebildete Erfassungseinrichtung 17 umfassen kann, welche zur Erfassung wenigstens einer Eigenschaft einer Baumaterialschicht, insbesondere eines selektiv zu verfestigenden bzw. eines selektiv verfestigten Bereichs einer Baumaterialschicht, und zur Erzeugung einer die wenigstens eine erfasste Eigenschaft der Baumaterialschicht beschreibenden Erfassungsinformation eingerichtet ist. Bei einer entsprechenden Eigenschaft kann es sich z. B. um die Temperatur oder den Aggregatszustand, insbesondere den schmelzförmigen Zustand, eines selektiv zu verfestigenden bzw. eines selektiv verfestigten Bereichs handeln, sodass sich über die Erfassungseinrichtung 17 ein lokales Schmelzbad 18 (vgl. Fig. 2 ff) erfassen lässt.

Die Steuereinrichtung 16 kann eingerichtet sein, wenigstens einen den Energieeintrag eines jeweiligen Energiestrahls in eine Baumaterialschicht beeinflussenden Energiestrahlparameter eines zweiten Energiestrahls 4b in Abhängigkeit einer durch eine Erfassungsinformation beschriebenen Eigenschaft einer Baumaterialschicht zu steuern. Durch jeweilige durch eine entsprechende Erfassungsinformation beschriebenen Eigenschaften einer Baumaterialschicht kann, insbesondere in Echtzeit, eine noch exakter kontrollierte Beeinflussung bzw. Steuerung des Aufheiz- bzw. Aufschmelzverhaltens respektive des Abkühl- bzw. Erstarrungsverhaltens der Baumaterialschicht vermittels eines oder mehrerer zweiter Energiestrahlen 4b realisiert werden.

Mit der in Fig. 1 gezeigten Vorrichtung 1 lässt sich ein Verfahren zur additiven Herstellung dreidimensionaler Objekte 2 durch sukzessives schichtweises selektives Bestrahlen und damit einhergehendes sukzessives schichtweises selektives Verfestigen von Baumaterialschichten aus einem vermittels eines Energiestrahls 4a verfestigbaren Baumaterial 3, wobei mehrere Bestrahlungseinrichtungen 6, 7 verwendet werden, implementieren. Das Verfahren zeichnet sich dadurch aus, dass eine erste Bestrahlungseinrichtung auf Grundlage von durch eine Steuereinrichtung 16 erzeugten ersten Steuerinformationen zur Erzeugung eines ersten Energiestrahls 4a zur sukzessiven schichtweisen selektiven Verfestigung einer Baumaterialschicht betrieben wird, und eine zweite Bestrahlungseinrichtung auf Grundlage von durch eine Steuereinrichtung 16 erzeugten zweiten Steuerinformationen zur Erzeugung eines zweiten Energiestrahls 4b zur thermischen Vorbehandlung einer selektiv zu verfestigenden Baumaterialschicht, insbesondere in einem selektiv zu verfestigenden Bereich der Baumaterialschicht, und/oder einen zweiten Energiestrahl 4b zur thermischen Nachbehandlung einer selektiv verfestigten Baumaterialschicht, insbesondere in einem selektiv verfestigten Bereich der Baumaterialschicht betrieben wird.

## Patentansprüche

1. Verfahren zur additiven Herstellung dreidimensionaler Objekte, welches Verfahren umfassend:
Emittieren eines ersten Energiestrahls von einer ersten Bestrahlungseinrichtung (6), welche zur sukzessiven schichtweisen selektiven Verfestigung von Schichten eines Baumaterials eingerichtet ist;
Emittieren eines zweiten Energiestrahls von einer zweiten Bestrahlungseinrichtung (7), welche zur thermischen Vorbehandlung und/oder zur thermischen Nachbehandlung der entsprechenden selektiv zu verfestigenden Schicht eines Baumaterials eingerichtet ist; **dadurch gekennzeichnet, dass** die erste Bestrahlungseinrichtung und die zweite Bestrahlungseinrichtung von einer Steuereinrichtung auf Grundlage von Steuerinformationen welche zur Steuerung eines örtlichen und/oder zeitlichen Versatzes des zweiten Energiestrahls relativ zu dem ersten Energiestrahl eingerichtet sind, gesteuert werden.

2. Verfahren nach Anspruch 1, wobei die Steuereinrichtung eingerichtet ist, erste Steuerinformationen zu erzeugen, wobei die ersten Steuerinformationen eingerichtet sind, die erste Bestrahlungseinrichtung zu steuern; und/oder
wobei die Steuereinrichtung eingerichtet ist, zweite Steuerinformationen zu erzeugen, wobei die zweiten Steuerinformationen eingerichtet sind, die zweite Bestrahlungseinrichtung zu steuern.

3. Verfahren nach Anspruch 1 oder 2, umfassend: Führen des zweiten Energiestrahls, auf Grundlage von Steuerinformationen von der Steuereinrichtung, wobei der zweite Energiestrahl dem ersten Energiestrahl gemäß dem örtlichen und/oder zeitlichen Versatz entlang derselben Bewegungsbahn wie der erste Energiestrahl vor- oder nachläuft.

4. Verfahren nach einem der Ansprüche 1 bis 3, wobei der örtliche und/oder zeitliche Versatz einen seitlichen Versatz relativ zu einer Bewegungsbahn des ersten Energiestrahls beinhaltet.

5. Verfahren nach einem der Ansprüche 1 bis 4, wobei die Steuereinrichtung eingerichtet ist, den Energieeintrag der thermischen Vorbehandlung und/oder der thermischen Nachbehandlung auf Grundlage des örtlichen und/oder zeitlichen Versatzes zu steuern.

6. Verfahren nach einem der Ansprüche 1 bis 5, wobei der erste Energiestrahl und der zweite Energiestrahl sich voneinander in wenigstens einem Energiestrahlparameter, welcher den Energieeintrag in eine Baumaterialschicht beeinflusst, unterscheiden.

7. Verfahren nach einem der Ansprüche 1 bis 6, wobei der wenigstens eine Energiestrahlparameter umfasst: die Energiestrahlintensität und/oder den Energiestrahlfokusdurchmesser und/oder die Energiestrahlgeschwindigkeit, mit welcher der Energiestrahl über eine Baumaterialschicht geführt wird.

8. Verfahren nach einem der Ansprüche 1 bis 7, umfassend: Erfassen, mittels einer Erfassungseinrichtung, wenigstens eine Eigenschaft einer Baumaterialschicht; und Erzeugen, mittels der Erfassungseinrichtung, einer die wenigstens eine erfasste Eigenschaft der Baumaterialschicht beschreibende Erfassungsinformation.

9. Verfahren nach Anspruch 8, wobei die Steuereinrichtung eingerichtet ist, wenigstens einen Energiestrahlparameter des zweiten Energiestrahls auf Grundlage der Erfassungsinformation zu steuern.

10. Verfahren nach einem der Ansprüche 1 bis 9, umfassend:
Emittieren eines zusätzlichen zweiten Energiestrahls von einer zusätzlichen zweiten Bestrahlungseinrichtung, wobei der zusätzliche zweite Energiestrahl zur thermischen Vorbehandlung und/oder zur thermischen Nachbehandlung einer Schicht eines Baumaterials eingerichtet ist;
wobei der zusätzliche zweite Energiestrahl von der Steuereinrichtung auf Grundlage von Steuerinformationen zur Steuerung eines zusätzlichen örtlichen und/oder zeitlichen Versatzes des zusätzlichen zweiten Energiestrahls relativ zu dem ersten Energiestrahl gesteuert wird; und
Führen des zusätzlichen zweiten Energiestrahls auf Grundlage von Steuerinformationen von der Steuereinrichtung, wobei der zusätzliche zweite Energiestrahl dem ersten Energiestrahl gemäß dem zusätzlichen örtlichen und/oder zeitlichen Versatz entlang derselben Bewegungsbahn wie der erste Energiestrahl vor- oder nachläuft].

11. Verfahren nach Anspruch 10,
wobei sie mehrere als zweite Bestrahlungseinrichtungen betreibbare oder betriebene Bestrahlungseinrichtungen (6, 7) umfasst, wobei die Steuereinrichtung (16) eingerichtet ist, zweite Steuerinformationen zu erzeugen, auf Grundlage welcher die durch jeweilige zweite Bestrahlungseinrichtungen erzeugten zweiten Energiestrahlen (4b) mit einem definierten örtlichen und/oder zeitlichen Versatz seitlich zu einer Bewegungsbahn, entlang welcher der durch die erste Bestrahlungseinrichtung erzeugte erste Energiestrahl (4b) über eine selektiv zu verfestigende Baumaterialschicht führbar oder geführt ist, über die selektiv zu verfestigende oder verfestigte Baumaterialschicht führbar oder geführt sind.

12. Verfahren nach einem der Ansprüche 1 bis 11, wobei wenigstens eine erste
Bestrahlungseinrichtung auf Grundlage von durch eine Steuereinrichtung (16) erzeugten ersten Steuerinformationen zur Erzeugung eines ersten Energiestrahls (4a) zur sukzessiven schichtweisen selektiven Verfestigung einer Baumaterialschicht betrieben wird, und
wenigstens eine zweite Bestrahlungseinrichtung auf Grundlage von durch eine Steuereinrichtung (16) erzeugten zweiten Steuerinformationen zur Erzeugung eines zweiten Energiestrahls (4b) zur thermischen Vorbehandlung einer selektiv zu verfestigenden Baumaterialschicht, insbesondere in einem selektiv zu verfestigenden Bereich der Baumaterialschicht, und/oder eines zweiten Energiestrahls (4b) zur thermischen Nachbehandlung einer selektiv verfestigten Baumaterialschicht, insbesondere in einem selektiv verfestigten Bereich der Baumaterialschicht betrieben wird.

13. Verfahren nach Anspruch 11,
wobei die durch jeweilige zweite Bestrahlungseinrichtungen erzeugten zweiten Energiestrahlen (4b) mit einem definierten örtlichen und/oder zeitlichen Versatz parallel zu der Bewegungsbahn, entlang welcher der durch die erste Bestrahlungseinrichtung erzeugte erste Energiestrahl (4b) über eine selektiv zu verfestigende Baumaterialschicht führbar oder geführt ist, über die selektiv zu verfestigende oder verfestigte Baumaterialschicht führbar oder geführt sind.

## Claims

1. A method for additively manufacturing three-dimensional objects, the method comprising:
emitting a first energy beam from a first irradiation device (6), which is set up for successive layer-by-layer selective solidification of layers of a building material;
emitting a second energy beam from a second irradiation device (7), which is equipped for thermal pretreatment and / or for thermal posttreatment of the corresponding selectively to be solidified layer of a building material; **characterized in that** the first irradiation device and the second irradiation device are controlled by a control device based on control information, which are set up for controlling a local and / or time offset of the second energy beam relative to the first energy beam.

2. The method of claim 1, wherein the control device is set up to generate first control information, wherein the first control information is set up to control the first irradiation device; and/or
wherein the control device is set up to generate second control information, wherein the second control information is set up to control the second irradiation device.

3. The method of claim 1 or 2, comprising: Leading the second energy beam, based on control information from the control device, wherein the second energy beam precedes or follows the first energy beam according to the local and / or time offset along the same trajectory as the first energy beam.

4. The method according to any one of claims 1 to 3, wherein the local and / or temporal offset includes a lateral offset relative to a trajectory of the first energy beam.

5. The method according to any one of claims 1 to 4, wherein the control device is set up to control the energy input of the thermal pretreatment and / or the thermal posttreatment on the basis of the local and / or temporal offset.

6. The method according to any one of claims 1 to 5, wherein the first energy beam and the second energy beam differ from each other in at least one energy beam parameter, which affects the energy input into a building material layer.

7. The method according to any one of claims 1 to 6, wherein the at least one energy beam parameter comprises: the energy beam intensity and/or the energy beam focus diameter and/or the energy beam velocity at which the energy beam is guided over a building material layer.

8. The method according to any one of claims 1 to 7, comprising: detecting, by means of a detection device, at least one property of a building material layer; and generating, by means of the detection device, one of the at least one detected property of the building material layer descriptive detection information.

9. The method of claim 8, wherein the control device is configured to control at least one energy beam parameter of the second energy beam based on the detection information.

10. The method according to any one of claims 1 to 9, comprising:
emitting an additional second energy beam from an additional second irradiation device, wherein the additional second energy beam is set up for thermal pretreatment and/or thermal post-treatment of a layer of a building material;
wherein the additional second energy beam is controlled by the control device on the basis of control information for controlling an additional local and / or time offset of the additional second energy beam relative to the first energy beam; and
Leading the additional second energy beam based on control information from the control device, wherein the additional second energy beam precedes or precedes the first energy beam according to the additional local and / or time offset along the same path of motion as the first energy beam].

11. The method of claim 10, wherein it comprises several irradiation devices that can be operated or operated as second irradiation devices (6, 7), wherein the control device (16) is configured to generate second control information, on the basis of which the second energy rays (4b) generated by respective second irradiation devices with a defined local and / or temporal offset laterally to a trajectory along which the first energy beam (4b) generated by the first irradiation device can be guided or guided via a selectively solidified building material layer, via the selectively solidified or solidified building material layer.

12. The method according to any one of claims 1 to 12, wherein at least one first irradiation device is operated on the basis of first control information generated by a control device (16) for generating a first energy beam (4a) for successive layer-wise selective solidification of a building material layer, and
at least one second irradiation device based on second control information generated by a control device (16) for generating a second energy beam (4b) for thermal pretreatment of a selectively solidified building material layer, in particular in a selectively solidified region of the building material layer, and / or a second energy beam (4b) for thermal post-treatment of a selectively solidified building material layer, in particular in a selectively solidified region of the building material layer is operated.

13. The method of claim 11, wherein the second energy beams (4b) generated by the respective second irradiation devices with a defined local and / or temporal offset parallel to the trajectory along which the first energy beam (4b) generated by the first irradiation device can be guided or guided via a selectively to be solidified building material layer, can be guided or guided via the selectively to be solidified or solidified building material layer.

## Revendications

1. Un procédé de fabrication additive d'objets tridimensionnels comprenant:
l'émission d'un premier faisceau d'énergie à partir d'un premier dispositif d'irradiation (6) destiné à la solidification sélective par couches successives de couches d'un matériau de construction;
l'émission d'un deuxième faisceau d'énergie à partir d'un deuxième dispositif d'irradiation (7) équipé pour le prétraitement thermique et/ou le post-traitement thermique de la couche correspondante d'un matériau de construction à solidifier sélectivement; **caractérisé en ce que** le premier dispositif d'irradiation et le deuxième dispositif d'irradiation sont commandés par un dispositif de commande sur la base d'informations de commande qui sont mises en place pour contrôler un décalage local et/ou temporel du deuxième faisceau d'énergie par rapport au premier faisceau d'énergie.

2. Le procédé selon la revendication 1, dans lequel l'appareillage de commande est configuré pour produire les premières informations de commande, dans lequel les premières informations de commande sont configurées pour commander le premier appareillage d'irradiation; et/ou
où l'installation de commande est configurée pour produire la deuxième information de commande, où la deuxième information de commande est configurée pour commander la deuxième installation d'irradiation.

3. Le procédé selon la revendication 1 ou 2, comprenant: Conduite du deuxième faisceau d'énergie, sur la base d'informations de commande provenant du dispositif de commande, le deuxième faisceau d'énergie devant ou suivant le premier faisceau d'énergie selon le décalage local et/ou temporel le long de la même trajectoire de mouvement que le premier faisceau d'énergie.

4. Le procédé selon l'une quelconque des revendications 1 à 3, dans lequel le décalage local et/ou temporel comporte un décalage latéral par rapport à une trajectoire de mouvement du premier faisceau d'énergie.

5. Le procédé selon l'une quelconque des revendications 1 à 4, dans lequel le dispositif de commande est équipé pour commander l'entrée d'énergie du prétraitement thermique et/ou du post-traitement thermique sur la base du décalage local et/ou temporel.

6. Le procédé selon l'une quelconque des revendications 1 à 5, dans lequel le premier faisceau d'énergie et le deuxième faisceau d'énergie se distinguent l'un de l'autre par au moins un paramètre de faisceau d'énergie qui influence l'apport d'énergie dans une couche de matériau de construction.

7. Le procédé selon l'une quelconque des revendications 1 à 6, dans lequel celui-ci comprend au moins un paramètre de faisceau d'énergie: l'intensité du faisceau d'énergie et/ou le diamètre de focalisation du faisceau d'énergie et/ou la vitesse du faisceau d'énergie à laquelle le faisceau d'énergie passe sur une couche de matériau de construction.

8. Le procédé selon l'une quelconque des revendications 1 à 7, comprenant: Détection, au moyen d'un dispositif de détection, d'au moins une propriété d'une couche de matériau de construction; et produire, à l'aide du dispositif de détection, une information de détection descriptive d'au moins une propriété détectée de la couche de matériau de construction.

9. Le procédé selon la revendication 8, dans lequel l'appareillage de commande est équipé pour commander au moins un paramètre de faisceau d'énergie du deuxième faisceau d'énergie sur la base des informations de détection.

10. Le procédé selon l'une quelconque des revendications 1 à 9, comprenant:
émettre un deuxième faisceau d'énergie supplémentaire à partir d'un deuxième dispositif d'irradiation supplémentaire, le deuxième faisceau d'énergie supplémentaire étant destiné au prétraitement thermique et/ou au post-traitement thermique d'une couche d'un matériau de construction;
le deuxième faisceau d'énergie supplémentaire étant contrôlé par le dispositif de commande sur la base d'informations de commande permettant de contrôler un décalage local et/ou temporel supplémentaire du deuxième faisceau d'énergie supplémentaire par rapport au premier faisceau d'énergie; et
Exécution du deuxième faisceau d'énergie supplémentaire à partir du dispositif de commande sur la base d'informations de commande, le deuxième faisceau d'énergie supplémentaire devant ou après le premier faisceau d'énergie selon le décalage local et/ou temporel supplémentaire le long de la même trajectoire de mouvement que le premier faisceau d'énergie].

11. Le procédé selon la revendication 10, dans lequel il comprend plusieurs dispositifs d'irradiation utilisables ou exploités en tant que deuxièmes dispositifs d'irradiation (6, 7), dans lequel le dispositif de commande (16) est équipé pour produire une deuxième information de commande sur la base de laquelle les deuxièmes faisceaux d'énergie (4b) produits par chacun des deuxièmes dispositifs d'irradiation, avec un décalage local et/ou temporel défini, sont dirigés latéralement vers une trajectoire le long de laquelle le premier faisceau d'énergie (4b) produit par le premier dispositif d'irradiation est dirigeable ou guidé par une couche de matériau de construction sélectivement à solidifier ou à solidifier.

12. Le procédé selon l'une quelconque des revendications 1 à 12, dans lequel au moins un premier dispositif d'irradiation est exploité sur la base d'informations de commande initiales produites par un dispositif de commande (16) pour la production d'un premier faisceau d'énergie (4a) en vue de la solidification sélective par couches successives d'une couche de matériau de construction, et
au moins un deuxième dispositif d'irradiation est exploité sur la base d'informations de commande produites par un dispositif de commande (16) pour la production d'un deuxième faisceau d'énergie (4b) destiné au prétraitement thermique d'une couche de matériau de construction à solidifier sélectivement, en particulier dans une zone de la couche de matériau de construction à solidifier sélectivement, et/ou d'un deuxième faisceau d'énergie (4b) destiné au post-traitement thermique d'une couche de matériau de construction à solidifier sélectivement, en particulier dans une zone de la couche de matériau de construction à solidifier sélectivement.

13. Le procédé selon la revendication 11, dans lequel les deuxièmes faisceaux d'énergie (4b) produits par chaque deuxième dispositif d'irradiation, avec un décalage local et/ou temporel défini, sont parallèles à la trajectoire le long de laquelle le premier faisceau d'énergie (4b) produit par le premier dispositif d'irradiation peut être maîtrisé ou conduit par l'intermédiaire d'une couche de matériau de construction à solidifier sélectivement, par l'intermédiaire de laquelle une couche de matériau de construction à solidifier ou à solidifier sélectivement peut être maîtrisée ou guidée.
